Europäisches Patentamt

European Patent Office

Office européen des brevets

(11) Numéro de publication: **0 378 865**
**A1**

## (12) DEMANDE DE BREVET EUROPEEN

(21) Numéro de dépôt: **89200100.9**

(22) Date de dépôt: **18.01.89**

(51) Int. Cl.5: **G09B 9/28**

(43) Date de publication de la demande:
**25.07.90 Bulletin 90/30**

(84) Etats contractants désignés:
**AT BE CH DE ES FR GB GR IT LI LU NL SE**

(71) Demandeur: **Burny, Gilbert**
**34, Avenue des Genêts**
**B-6001 Marcinelle(BE)**

(72) Inventeur: **Burny, Gilbert**
**34, Avenue des Genêts**
**B-6001 Marcinelle(BE)**

(74) Mandataire: **Bossard, Franz**
**288, rue de Jamioulx**
**B-6110 Montigny-le-Tilleul(BE)**

(54) **Simulateur d'avion.**

(57) Simulateur d'avion comprenant, dans un bâti, des commandes manuelles (1), un calculateur de bord (15), et au moins un dispositif simulant, au niveau des commandes manuelles (1) des réactions d'ailerons de commande, dans lequel le dispositif simulant des réactions d'ailerons est constitué par un équipzge (5) supportant des poulies folles (7,8,9), et pivotant autour d'un axe (6) commun à deux de ces poulies (7,8), dans lequel une (7) de ces deux poulies est sollicitéedans un sens et dans l'autre par des câbles (3,4) reliés à la commande manuelle, dans lequel les extrémités de ces câbles (3,4) sont reliées à un noeud commun (11) sollicité en traction par un câble commun (12), dans lequel le câble commun (12) passe sur une troisième poulie (9) dont l'axe (10) est fixé sur l'équipage pivotant (5) à une distance déterminée de l'axe de pivotement (6), dans lequel ce câble commun (12) passe ensuite sur une deuxième poulie (8) sur l'axe de pivotement (6) vers un dispositif de traction (13,14), dans lequel ce dernier dispositif engendre dans le câble commun (12) un effort réglable en fonction d'un signal fourni par le calculateur de bord (15), et dans lequel l'équipage pivotant (5) comprend un moyen d'arrêt (18,19) de sa position angulaire autour de l'axe de pivotement.

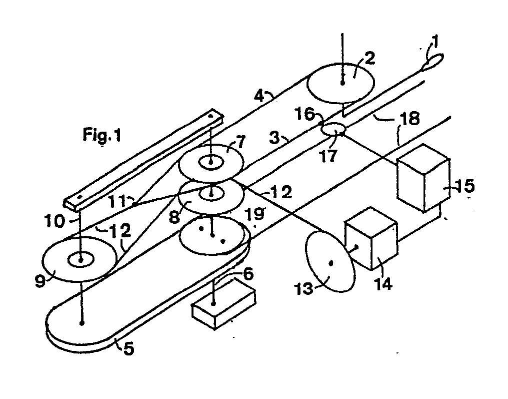

Fig.1

## Simulateur d'avion

La présente invention concerne un simulateur d'avion comprenant, dans un bâti, des commandes manuelles accessibles à un pilote, un calculateur de bord simulant des conditions de vol, des dispositifs sensibles à la position des commandes manuelles envoyant des signaux d'information vers le calculateur de bord, et un dispositif de simulation d'effort. Ce dernier dispositif simule, au niveau des commandes manuelles, des réactions d'ailerons de commande qui, en réalité, seraient produites par les ailerons et ressenties dans les commandes manuelles.

Un tel dispositif de simulation d'effort est en soi connu et décrit dans le brevet belge N° 757850. Ce dispositif connu est très compliqué et lourd; son fonctionnement est en outre soumis à des frictions qui gênent son efficacité et la rapidité de sa réponse.

Le simulateur suivant la présente invention porte remède à ces inconvénients. Les frictions y sont réduites à un minimum, ainsi que son inertie. Il est en outre de construction extrèmement simple et peut être réglé au moyen de courants électriques. Il est défini dans les revendications ci-dessous.

L'invention est expliquée dans ce qui suit par rapport à un exemple de réalisation et en se référant au dessin annexé.

La figure 1 de ce dessin est une vue en perspective schématique, montrant le principe de l'invention.

La figure 2 est une vue en élévation d'un équipage pivotant particulièrement avantageux.

Suivant la figure 1, un manche de commande manuelle 1 actionne une poulie 2 dont l'axe est solidarisé avec un bâti, non représenté. A la poulie 2 sont attachés deux câbles 3 et 4 dont les autres extrémités sont reliées à un dispositif de simulation d'effort. Ce dispositif comprend un équipage pivotant constitué d'une base 5 pivotable autour d'un axe 6 et de trois poulies folles dont deux 7 et 8 sur l'axe 6 et une troisième 9 sur un axe 10. L'axe 6 est solidaire du bâti, non représenté, tandisque l'axe 10 est fixé sur la base pivotante 5. Les câbles 3 et 4 s'enroulent en sens contraire autour de la poulie 7 et leurs extrémités sont reliées à un noeud 11 auquel est attaché un câble commun 12. Ce câble commun 12 s'enroule autour de la poulie 9 et revient vers la poulie 8 sur l'axe de pivotement 6 de la base de l'équipenment pivotant 5. Il est ensuite envoyé vers un dispositif de traction à effort réglable qui fait également partie du dispositif de simulation d'effort. Ce dispositif de traction est, de préférence, monté directement sur le bâti et non sur l'équipage pivotant 5. De cette manière l'inertie de l'équipage 5 est maintenue à un minimum. Le dispositif de traction est constitué par un tambour 13 pour l'enroulement du câble 12 et un moteur couple 14 sollicitant le tambour 13. Le courant d'alimentation du moteur 14 est commandé par un calculateur de bord 15 qui reçoit des informations sur les conditions simulées de vol au moyen de sélecteurs, non représentés, et sur la position de commandes manuelles 1, par exemple grâce à un élément 16 sur le câble 3 dont la position est repérée par un dispositif de mesure 17. La position angulaire de la base 5 est fixée par un moyen adéquat, tel un câble 18 entraînant une poulie 19 solidaire de la base 5. Le câble 18 est actionné par un roulette de trim, non représentée, accessible au pilote, ou par l'intermédiaire d'un moteur, non représenté, commandé par le calculateur de bord 15, en fonction de la manipulation par le pilote de la roulette de trim.

L'élevation montrée à la figure 2 est relative à un équipage pivotant dans lequel un soin particulier a été développé pour réduire à un minimum les frictions des câbles entr'eux et par rapport aux gorges des poulies. Dans ce but, les câbles sont sectionnée en tronçons et chaque tronçon s'étend en direction perpendiculaire aux axes des poulies. Les différents poulies 7, et 9 montrés à la figure 1 sont ici des poulies à deux gorges, en réalité des assemblages de deux poulies à une gorge et d'un disque de fixation d'extrémités de câbles.

Les câbles 3 et 4 sont amenés de part et d'autre dans la gorge supérieure de la poulie 7 et sont fixés à un disque de fixation 20 disposé entre les deux gorges. Le câble commun 12 passe dans l'unique gorge de la poulie 8 et dans la gorge inférieure de la poulie 9. Il est fixé à un disque de fixation 21 disposé entre les deux gorges de la poulie 9. Le prolongement 22 de ce câble 12 est également fixé au disque 21, mais passe dans la gorge supérieure de la poulie 9. Son autre extrémité est reliée au noeud 11. Les prolongements 23 et 24 des câbles 3 et 4 sont fixés d'une part au disque 20 et passent dans la gorge inférieure de la poulie 7 leurs autres extrémités sont reliées au noeud 11. La fixation d'un tronçon de câble à un disque de fixation 20 ou 21 a lieu toujours lorsque celui-ci a fait au moins un demi tour dans la gorge qui lui est attribuée.

Si le câble commun 12 n'est pas mené à angle droit vers le dispositif de traction 13,14, comme cela est montré à la figure 1, une poulie folle intermédiaire 25, fixée sur l'équipage 5 peut éviter que pour certaines positions angulaires de l'équipage 5, le câble commun 12 risque de se détacher de la poulie 8. Comme on le voit sur le dessin, les gorges inférieure de la poulie 7 et supérieure de la poulie 9 sont situées dans un même plan perpendiculaire à l'axe de pivotement 6. De même, les gorges inférieure de la poulie 9 et les uniques gorges des poulies 25 et 8 se trouvent aussi dans un même plan perpendiculaire à l'axe de pivotement 6. Il va de soi que pour atteidre le meilleur résultat, le tambour 13, sur lequel s'enroule le câble 12 doit être tangent à ce dernier plan.

Dans un avion, des ailerons de commande existent pour les trois axes principales de l'avion: roulis, tangage et lacet. Un équipement comme décrit ci dessus et représenté aux figures 1 et 2 est donc à prévoir pour chacun de ces axes, sila simulation doitêtre complète. Tous ces équipements peuvent être montés sur un même bâti, mais restent indépendantes l'une par rapport à l'autre. Un simulateur complet comprend donc trois équipages pivotants 5, trois dispositifs de traction 13,14 et trois moyens de réglage 18,19 des positions angulaires des équipages pivotants 5.

Dans le but d'éviter l'utilisation d'un tambour et d'un réducteur de vitesse que nécessite un moteur couple du commerce, il est possible et même avantageux de remplacer l'ensemble tambour 13 et moteur couple 14 par un moteur linéaire attaquant directement le câble commun 12.

## Revendications

1. Simulateur d'avion comprenant, dans un bâti, -
des commandes manuelles (1) accessibles à un pilote, -
un calculateur de bord (15) simulant des conditions de vol, -
au moins un dispositif simulant, au niveau des commandes manuelles (1), des réactions d'ailerons de commande qui, en réalité, seraient actionnés par les commandes manuelles, - et des dispositifs (16,17) sensibles à la position des commandes manuelles envoyant des signaux d'information vers le calculateur de bord (15),
caractérisé en ce que le dispositif simulant des réactions d'ailerons est constitué par au moins un équipage (5) supportant des poulies folles (7,8,9), et pivotant autour d'un axe (6) commun à deux (7,8) de ces poulies, en ce que une (7) de ces deux poulies est sollicitée dans un sens de rotation et dans l'autre par des câbles (3,4) reliés à une des commandes manuelles, en ce que les extrémités de ces câbles (3,4) sont reliées à un noeud commun (11) sollicité en traction par un câble commun (12), en ce que ce câble commun (12) passe sur une troisième poulie (9) dont l'axe (10) est fixé sur l'équipage pivotant (5) à une distance déterminée de l'axe de pivotement (6), en ce que ce câble commun (12) passe ensuite sur la deuxième poulie (8) sur l'axe de pivotement (6) vers un dispositif de traction (13,14), en ce que ce dernier dispositif engendre dans le câble commun (12) un effort réglable en fonction d'un signal fourni par le calculateur de bord (15), et en ce que l'équipage pivotant (5) comprend un moyen d'arrêt (18,19) de sa position angulaire autour de l'axe de pivotement.

2. Simulateur suivant la revendication 1, caractérisé en ce que le dispositif de traction (13,14) est monté sur le bâti et non sur l'équipage pivotant (5).

3. Simulateur suivant une des revendications 1 ou 2, caractérisé en ce que l'équipage pivotant comprend un moyen de réglage (18,19) de sa position angulaire autour de l'axe de pivotement (6) commandé par une roulette de trim accessible au pilote.

4. Simulateur suivant une des revendications précédentes, caractérisé en ce que le dispositif de traction à effort réglable est un tambour d'enroulement (13) pour le câble commun (12), sollicité par un moteur couple (14) dont le courant d'alimentation est commandé par le calculateur de bord (15).

5. Simulateur suivant une des revendications précédentes, caractérisé en ce que les câbles (3,4,12) sont sectionnés en tronçons dont certaines extrémités sont fixées dans des disques de fixation (20,21) entre les gorges des poulies (7,9), et en ce que ces tronçons sont disposés dans les gorges des poulies de manière qu'ils restent dans des plans perpendiculaires à l'axe de pivotement (6) de l'équipage (5).

6. Simulateur suivant une des revendications précédentes, caractérisé en ce qu'il comprend trois équipages pivotants (5), reliés à trois commandes différentes, trois dispositifs de traction (13,14) , chacun relié à un des équipages pivotants, et trois moyens de réglage (18,19) des positions angulaires des équipages pivotants (5)

7. Simulateur suivant une des revendications précédentes, caractérisé en ce que le dispositif de traction à effort variable est un moteur linéaire attaquant directement le câble commun (12).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 517 446 (P.R. CORLYON et al.) <br> * Figures 2,3; colonne 2, ligne 53 - colonne 3, ligne 28 * <br> --- | 1 | G 09 B 9/28 |
| A | GB-A-1 294 160 (THE SINGER CO.) <br> * Figures 1,2; page 2, lignes 3-107 * <br> --- | 1 | |
| A,D | FR-A-2 110 036 (ACEC) <br> * Figures 1-3,6; revendications * <br> ----- | 1 | |

DOMAINES TECHNIQUES
RECHERCHES (Int. Cl.5)

G 09 B

Le présent rapport a été établi pour toutes les revendications

| Lieu de la recherche | Date d'achèvement de la recherche | Examinateur |
|---|---|---|
| LA HAYE | 14-09-1989 | CARDON A. |